# EUROPÄISCHE PATENTANMELDUNG

(11) **EP 3 928 803 A1**
(43) Veröffentlichungstag der Anmeldung: **29.12.2021**
(21) Anmeldenummer: 20216514.8
(22) Anmeldetag: 22.12.2020
(51) Int. Cl.: A61L 2/18, B08B 9/032, C11D 1/04, C11D 7/26, C11D 11/00, A61L 2/07, A61L 2/04, A23C 7/02

(54) **VORRICHTUNG ZUR KONTINUIERLICHEN PEF-BEHANDLUNG VON FLÜSSIGEN MEDIEN UND VERFAHREN ZUM REINIGEN UND/ODER STERILISIEREN DER VORRICHTUNG**

(30) Priorität: 25.06.2020 DE 102020207908
(71) Anmelder: Krones AG, 93073 Neutraubling (DE)
(72) Erfinder: Hoeller, Stefan, 93073 Neutraubling (DE); Feilner, Roland, 93073 Neutraubling (DE); Scherer, Christoph Hans, 93073 Neutraubling (DE)
(74) Vertreter: Grünecker Patent- und Rechtsanwälte PartG mbB

(57) **Zusammenfassung**

Die Erfindung betrifft eine Vorrichtung (1, 72) in der Getränke- oder Lebensmittelindustrie zur PEF-Behandlung von flüssigen Medien umfassend ein PEF-Modul (34). Die Vorrichtung ist derart ausgebildet, dass während eines Betriebs der Vorrichtung das PEF-Modul kontinuierlich betreibbar ist durch Bereitstellen einer Mischung (26) eines Ausschubmediums mit mindestens einem leitwerterhöhenden Stoff zum Ausschieben von flüssigem Produkt aus der Vorrichtung oder eines Sterilisationsmediums mit dem mindestens einen leitwerterhöhenden Stoff zum Sterilisieren des PEF-Moduls und vom Bereich der Vorrichtung, der dem PEF-Modul nachfolgt, wobei die Mischung durch das PEF-Modul leitbar ist. Weiter betrifft die Erfindung Verfahren, beispielsweise zum Betreiben der Vorrichtung.

## Beschreibung

Die vorliegende Erfindung betrifft eine Vorrichtung zur PEF-Behandlung von flüssigen Medien gemäß dem Oberbegriff des unabhängigen Vorrichtungsanspruchs und Verfahren, beispielsweise zum Betreiben der Vorrichtung, gemäß den unabhängigen Verfahrensansprüchen.

### Stand der Technik

Eine PEF-Behandlung besteht aus einer beispielsweise rohrförmigen Behandlungszelle, durch die das zu behandelnde Produkt geleitet wird. Für eine hygienische bzw. aseptische PEF-Produktion müssen vorab alle hygienischen bzw. aseptischen Komponenten vor Produktionsbeginn mit Rein-Dampf oder mit Heißwasser sterilisiert werden. Üblicherweise wird hierzu Heißwasser verwendet, das über einen separaten Kreislauf mit Rein-Dampf erhitzt wird. Als nachteilig erweist sich hierbei der hohe apparative Aufwand. Alternativ kann auch mit Rein-Dampf erhitzt werden. Zum Abkühlen bei Dampfsterilisation ist Wasser mit einem zusätzlichen Sterilwasserfilter notwendig, der steriles Wasser durch die PEF-Behandlungszelle fährt und so die nachgeschalteten sterilisierten Komponenten nicht mit Keimen wieder kontaminiert.

Vor Produktionsbeginn wird das sich in der Anlage befindliche Medium wie beispielsweise Sterilwasser durch Produkt ausgeschoben. Am Ende der Produktion wird das Produkt wiederum mit Wasser ausgeschoben. Gerade auch bei Medienwechsel kommt es zu Problemen, da zwingend die elektrische Energie des PEF-Generators ans Medium abgegeben werden muss. Dazu ist zwingend eine elektrische Leitfähigkeit des Mediums erforderlich. Ist dies nicht gegeben, kann die Energie nicht abgegeben werden. Dies führt zu einer Abschaltung des PEF-Generators, um sich selbst zu schützen. Generell besteht bei Medien mit einem geringen Leitwert die Gefahr von Kurzschlüssen. Fällt das PEF-Energiefeld aus, ist die Sterilität der Anlage nicht mehr gegeben. Die Folge sind mehrstündige erforderliche Produktionsunterbrechung für CIP/SIP, um die Sterilität der Anlage wiederherzustellen.

### Aufgabe

Ausgehend vom bekannten Stand der Technik besteht die zu lösende technische Aufgabe darin, eine Vorrichtung und ein Verfahren anzugeben, die einen kontinuierlichen Betrieb des PEF-Moduls und dabei auch einen Medienwechsel in der Vorrichtung ermöglichen.

### Lösung

Diese Aufgabe wird erfindungsgemäß durch die Vorrichtung nach dem unabhängigen Vorrichtungsanspruch und die Verfahren nach den unabhängigen Verfahrensansprüchen gelöst. Weitere Ausführungsformen und Weiterbildungen sind in den Unteransprüchen erfasst.

Die erfindungsgemäße Vorrichtung in der Getränke- oder Lebensmittelindustrie zur Pulsed Electric Field-Behandlung, kurz auch PEF-Behandlung genannt, von flüssigen Medien umfasst ein Pulsed Electric Field-Modul, kurz auch PEF-Modul genannt. Die Vorrichtung ist derart ausgebildet, dass während eines Betriebs der Vorrichtung das PEF-Modul kontinuierlich betreibbar ist durch Bereitstellen einer Mischung eines Ausschubmediums mit mindestens einem leitwerterhöhenden Stoff zum Ausschieben von flüssigem Produkt aus der Vorrichtung oder eines Sterilisationsmediums mit dem mindestens einen leitwerterhöhenden Stoff zum Sterilisieren des PEF-Moduls und vom Bereich der Vorrichtung, der dem PEF-Modul nachfolgt, wobei die Mischung durch das PEF-Modul leitbar ist.

Ein kontinuierliches Betreiben des PEF-Moduls gewährleistet eine Aufrechterhaltung einer bestehenden Sterilität. Im Allgemeinen wird bei einem Produktwechsel vor dem neuen Produktionsbeginn das alte Produkt mittels Sterilwasser ausgeschoben. Da das Sterilwasser aber einen geringen Leitwert ausweist, kann es die vom PEF-Modul abgegebene Energie nicht aufnehmen, so dass es zu einer Sicherheitsabschaltung des PEF-Moduls kommen kann. Durch das erfindungsgemäße Hinzufügen von mindestens einem leitwerterhöhenden Stoff zu dem Ausschubmedium oder zu dem Sterilisationsmedium kann der Leitwert der entstehenden Mischung erhöht werden, so dass Energie von dem PEF-Modul an die Mischung abgegeben werden kann.

Beispielsweise kann der Bereich der Vorrichtung, der dem PEF-Modul nachfolgt, nicht nur von der Mischung von Sterilisationsmedium und dem mindestens einen leitwerterhöhenden Stoff durchflossen werden, sondern auch von der Mischung aus Ausschubmedium und dem mindestens einen leitwerterhöhenden Stoff.

Die flüssigen Medien können flüssige Lebensmittel sein oder umfassen.

Die Vorrichtung kann weiter mindestens einen Vorlagenbehälter, der ausgebildet ist jeweils einen der mindestens einen leitwerterhöhenden Stoffe bereitzustellen, und einen ersten Puffertank, der ausgebildet ist, das Ausschubmedium oder das Sterilisationsmedium und den mindestens einen leitwerterhöhenden Stoff aufzunehmen, umfassen.

Optional kann der mindestens eine leitwerterhöhende Stoff eine Flüssigkeit und/oder Feststoff sein, wobei optional der mindestens eine leitwerterhöhende Stoff eine organische Säure, wie beispielsweise Zitronensäure, sein kann, wobei optional das Ausschubmedium oder das Sterilisationsmedium Wasser oder Sterilwasser enthalten kann.

Der Leitwert der Mischung kann derart eingestellt werden, dass er im Wesentlichen gleich dem eines flüssigen Produkts ist, das mit der Vorrichtung behandelt werden soll. Die Einstellung kann beispielsweise über die zugegebene Menge des leitwerterhöhenden Stoffs, beispielsweise aus dem mindestens einen Vorlagenbehälter, gesteuert und/oder geregelt werden.

Der erste Puffertank kann einen Leitwertmesser umfassen, der ausgebildet ist, einen Leitwert der in dem Puffertank befindlichen Mischung zu messen. Über diesen Leitwertmesser und eine elektronische Steuerung kann beispielsweise die Regelung der Zugabemenge des leitwerterhöhenden Stoffs, beispielsweise aus dem mindestens einen Vorlagenbehälter, erfolgen.

Der erste Puffertank kann ein Druckbehälter sein.

Die Vorrichtung kann einen ersten Kreislauf zur Einstellung des Leitwerts der Mischung umfassen. In dem ersten Kreislauf können das Ausschubmedium oder Sterilisationsmedium und der mindestens eine leitwerterhöhende Stoff zugeführt, gemischt und die Mischung bereitgestellt werden.

Die Vorrichtung kann weiter einen Rekuperator, einen Wärmetauscher und einem zweiten Puffertank umfassen.

Der erste Puffertank und das PEF-Modul können derart leitungsverbunden sein, dass die Mischung aus dem ersten Puffertank zu dem PEF-Modul leitbar sein kann, und das PEF-Modul und der Rekuperator können derart leitungsverbunden sein, dass die Mischung von dem PEF-Modul zu dem Rekuperator leitbar sein kann und die Mischung umlaufend zumindest durch das PEF-Modul und den Rekuperator leitbar sein kann, bis eine Sterilisation erreichbar ist.

Leitungsverbunden kann hier und im Folgenden bedeuten, dass eine oder mehrere Rohrleitungen oder dergleichen vorgesehen sind, durch die die Mischung - und auch flüssiges Produkt oder die Mischung gemischt mit flüssigem Produkt - geleitet werden kann.

Der Rekuperator, der Wärmetauscher und der zweite Puffertank können derart leitungsverbunden sein, dass die Mischung nach Verlassen des Rekuperators über den Wärmetauscher dem zweiten Puffertank zuführbar sein kann, wobei optional der zweite Puffertank eine Sprühvorrichtung umfassen kann.

Der Rekuperator, der Wärmetauscher und der erste Puffertank können derart leitungsverbunden sein, dass die Mischung nach Verlassen des Rekuperators über den Wärmetauscher dem ersten Puffertank zuführbar sein kann.

So können das PEF-Modul, der Rekuperator, der Wärmetauscher und der zweite Puffertank sterilisiert werden. Ein Teil der Mischung, die beispielsweise nicht für das Sterilisieren benötigt wird, kann zurück zu dem ersten Puffertank geleitet werden.

Der erste Puffertank kann weiter derart mit dem Rekuperator leitungsverbunden sein, dass die Mischung von dem ersten Puffertank zu dem Rekuperator leitbar sein kann, wobei der Rekuperator und das PEF-Modul und der Rekuperator derart leitungsverbunden sein können, dass die Mischung von dem Rekuperator zu dem PEF-Modul wieder zu dem Rekuperator leitbar sein kann und die Mischung umlaufend zumindest durch das PEF-Modul und den Rekuperator leitbar sein kann, bis eine Sterilisation erreichbar ist.

Die Vorrichtung kann weiter einen Einlass für ein flüssiges Produkt, wie beispielsweise ein Getränk oder ein Lebensmittel, umfassen, wobei der Einlass mit dem Rekuperator derart leitungsverbunden sein kann, dass das flüssige Produkt dem Rekuperator zuführbar sein kann, wobei der Rekuperator und das PEF-Modul und der Rekuperator derart leitungsverbunden sein können, dass das flüssige Produkt von dem Rekuperator zu dem PEF-Modul und wieder zu dem Rekuperator leitbar sein kann und das flüssige Produkt zumindest durch das PEF-Modul und den Rekuperator leitbar sein kann, bis eine Sterilisation des Produkts erreichbar ist, wobei der Rekuperator, der Wärmetauscher und der zweite Pufferbehälter derart leitungsverbunden sein können, dass das flüssige Produkt nach Verlassen des Rekuperators über den Wärmetauscher dem zweiten Puffertank zuführbar sein kann, wobei optional der zweite Puffertank eine Sprühvorrichtung umfassen kann.

Dadurch kann das Produkt mittels des PEF-Moduls sterilisiert werden und dann dem zweiten Puffertank oder optional direkt einer Weiterverarbeitung zugeführt werden. In dem Wärmetauscher kann das sterilisierte Produkt abgekühlt werden.

Der Einlass und der zweite Puffertank können derart leitungsverbunden sein, dass das flüssige Produkt unter Umgehung des Rekuperators, des PEF-Moduls und des Wärmetauschers dem zweiten Puffertank zuführbar sein kann. Dies kann für ein Produkt vorgesehen sein, das keiner PEF-Sterilisation unterzogen werden soll.

Das erfindungsgemäße Verfahren, beispielsweise zum Betreiben der Vorrichtung, wie oben oder weiter unten beschrieben, umfasst folgende Schritte: ein Bereitstellen einer Mischung eines Ausschubmediums mit mindestens einem leitwerterhöhenden Stoff zum Ausschieben von flüssigem Produkt aus einer Vorrichtung in der Getränke- oder Lebensmittelindustrie zur Pulsed Electric Field-Behandlung, PEF-Behandlung, von flüssigen Medien umfassend ein Pulsed Electric Field-Modul, PEF-Modul, oder eines Sterilisationsmediums mit dem mindestens einen leitwerterhöhenden Stoff zum Sterilisieren eines PEF-Moduls der Vorrichtung und vom Bereich der Vorrichtung, der dem PEF-Modul nachfolgt, wobei die Mischung durch das PEF-Modul leitbar ist.

Um ein Sterilisieren durchzuführen, kann ein Leiten der Mischung aus dem ersten Puffertank zum PEF-Modul und vom PEF-Modul zum Rekuperator und/oder Leiten der Mischung vom ersten Puffertank zum Rekuperator, vom Rekuperator zum PEF-Modul und wieder zum Rekuperator erfolgen. Zum Erreichen der Sterilisation, kann ein Ausleiten der Mischung aus dem Rekuperator und nach Verlassen des Rekuperators, ein Zuführen der Mischung über den Wärmetauscher zum ersten Puffertank und/oder zum zweiten Puffertank erfolgen, dann kann ein Leiten der Mischung umlaufend zumindest durch das PEF-Modul und den Rekuperator erfolgen, bis eine Sterilisation erreicht wird.

In anderen Worten kann man sagen, dass ein Sterilisieren mit folgenden Schritten durchgeführt werden kann:
1) Leiten der Mischung aus dem ersten Puffertank zum PEF-Modul
2) Leiten der Mischung vom PEF-Modul zum Rekuperator
3) Leiten der Mischung vom Rekuperator (optional über Wärmetauscher) zum ersten Puffertank und/oder zweiten Puffertank
4) Erneutes Leiten der Mischung gemäß den Schritten 1) und 2) und optional 3) bis eine Sterilisation erreicht ist.

In anderen Worten kann man sagen, dass ein Sterilisieren in einer Alternative mit folgenden Schritten durchgeführt werden kann:
1) Leiten der Mischung vom ersten Puffertank zum Rekuperator
2) Leiten der Mischung vom Rekuperator zum PEF-Modul
3) Leiten der Mischung vom PEF-Modul zum Rekuperator
4) Leiten der Mischung vom Rekuperator (optional über Wärmetauscher) zum ersten Puffertank und/oder zweiten Puffertank
5) Erneutes Leiten der Mischung gemäß den Schritten 1), 2) und 3) und optional 4) bis eine Sterilisation erreicht ist.

Der Rekuperator kann als Produkt-Produkt-Wärmetauscher (im vorliegenden Fall, also den Sterilisationsmodus, als Mischung-Mischung-Wärmetauscher) ausgebildet sein, alternativ kann der Wärmetausch im Rekuperator über ein zusätzliches Wärmeaustauschmedium (z.B. Wasser) durchgeführt werden, welches in einem separaten Kreislauf geführt wird.

Wird die Vorrichtung erstmals betrieben, so kann ein Betreiben des PEF-Moduls beginnen, sobald die Mischung durch es hindurchgeleitet wird. Die Mischung kann dann die vom PEF-Modul abgegebene Energie aufnehmen.

Somit kann das PEF-Modul kontinuierlich betrieben werden, da beim Sterilisieren und der nachfolgend beschriebenen Produktion unter Verwendung des PEF-Moduls, Produktion ohne Verwendung des PEF-Moduls und einem Produktionsstopp immer die Mischung oder Produkt oder die Mischung gemischt mit Produkt durch das PEF-Modul geleitet wird und so die vom PEF-Modul abgegebene Energie aufgenommen werden kann.

Nach erfolgter Sterilisation kann eine Produktion unter Verwendung des PEF-Moduls erfolgen. Dazu kann ein Zuführen von flüssigem Produkt über einen Einlass zum Rekuperator, ein Leiten des Produkts vom Rekuperator zum PEF-Modul und wieder zum Rekuperator, dann ein Ausleiten des Produkts aus dem Rekuperator und nach Verlassen des Rekuperators, ein Zuführen des Produkts über den Wärmetauscher zum zweiten Puffertank erfolgen.

Alternativ kann eine zumindest teilweise Rückführung des Produkts nach dem Ausleiten des Produkts aus dem PEF-Modul in den Einlass zum Rekuperator erfolgen. Somit können beispielsweise Abnahmeschwankungen in stromabwärtsliegenden Prozessen zumindest kurzfristig überbrückt werden.

Nach erfolgter Sterilisation kann eine Produktion ohne Verwendung des PEF-Moduls erfolgen. Auch ein Produktionsstopp kann vorkommen. In diesen beiden Fällen kann ein Leiten der Mischung vom ersten Puffertank zum Rekuperator und vom Rekuperator zum PEF-Modul wieder zum Rekuperator, ein Ausleiten der Mischung aus dem Rekuperator und nach Verlassen des Rekuperators, ein Zuführen der Mischung über den Wärmetauscher zum ersten Puffertank erfolgen.

Optional kann vor dem Bereitstellen der Mischung ein Erstellen der Mischung mit einem Leitwert erfolgen. Dazu kann durch einen ersten Einlass ein Sterilisationsmedium, z.B. Sterilwasser, in einen ersten Puffertank eingebracht werden. Ein erster und/oder ein zweiter leitwerterhöhender Stoff, z.B. Zitronensäure oder eine andere organische Säure, kann aus einem jeweiligen Vorlagebehälter zur Einstellung des Leitwerts dem Sterilisationsmedium in dem ersten Puffertank zugeführt werden. Durch Hinzufügen des ersten und/oder zweiten leitwerterhöhenden Stoffs zu dem Sterilisationsmedium kann der Leitwert der Mischung aus Sterilisationsmedium und erstem und/oder zweitem leitwerterhöhenden Stoff eingestellt werden; beispielsweise derart, dass er gleich dem eines flüssigen Produkts ist, das mit der Vorrichtung behandelt werden soll.

Die Mischung kann aus dem ersten Puffertank ausgebracht und in einem ersten Kreislauf geführt werden, so dass gegebenenfalls noch erster und/oder zweiter leitwerterhöhender Stoff aus dem Vorlagebehälter hinzugefügt werden kann, falls ein vorgegebener Leitwert der Mischung noch nicht erreicht wurde.

Weiter betrifft die Erfindung ein Verfahren, beispielsweise zum Sterilisieren zumindest eines Teils einer Vorrichtung wie oben oder weiter unten beschrieben, umfassend folgende Schritte:
- Sterilisieren, in einem Sterilisationsmodus, mittels erhitztem Wassers, optional durch eine erhitzte Mischung aus Wasser und einem leitwerterhöhendem Stoff, von Leitungen und/oder Puffertanks einer Vorrichtung in der Getränke- oder Lebensmittelindustrie zur Pulsed Electric Field-Behandlung, PEF-Behandlung, von flüssigen Medien, die ein Pulsed Electric Field-Modul, PEF-Modul umfassen, wobei die Leitungen und/oder Puffertanks ausgebildet sind, in einem Produktionsmodus, von den durch das PEF-Modul sterilisierten flüssigen Medien durchflossen zu werden und/oder die durch das PEF-Modul sterilisierten flüssigen Medien zwischenzulagern. Eine Erhitzung des Wassers, optional eine Erhitzung der Mischung, ausgehend von einer ersten Temperatur von 90°C (der Wert gleich 90°C ist miteingeschlossen) auf eine zweite Temperatur von 110°C bis 130°C (die Werte von 110°C und 130°C können miteingeschlossen sein) erfolgt lediglich durch das PEF-Modul. Die flüssigen Medien können flüssige Lebensmittel sein.

Die Erhitzung des Wassers, optional die Erhitzung der Mischung, kann ausgehend von einer dritten Temperatur kleiner als 90°C bis zur ersten Temperatur von 90°C lediglich durch das PEF-Modul, durch das PEF-Modul und einen Wärmetauscher oder lediglich durch den Wärmetauscher erfolgen.

Es ist zudem möglich, beide Verfahren mit der erfindungsgemäßen Vorrichtung, insbesondere während desselben Sterilisationsprozesses, also kurz nacheinander, beispielsweise mit einer Zeitverzögerung von 5 Sekunden bis 1,5 Minuten, oder zumindest zeitweise gleichzeitig durchzuführen.

### Kurze Figurenbeschreibung

Die beigefügten Figuren stellen beispielhaft zum besseren Verständnis und zur Veranschaulichung Aspekte und Ausführungsformen der Erfindung dar. Es zeigt:
Figur 1 eine erste Ausführungsform einer Vorrichtung zur PEF-Behandlung von flüssigen Medien,
Figur 2 eine zweite Ausführungsform einer Vorrichtung zur PEF-Behandlung von flüssigen Medien und
Figur 3 ein Flussdiagramm eines Verfahrens zum Betreiben der Vorrichtung.

### Ausführliche Beschreibung

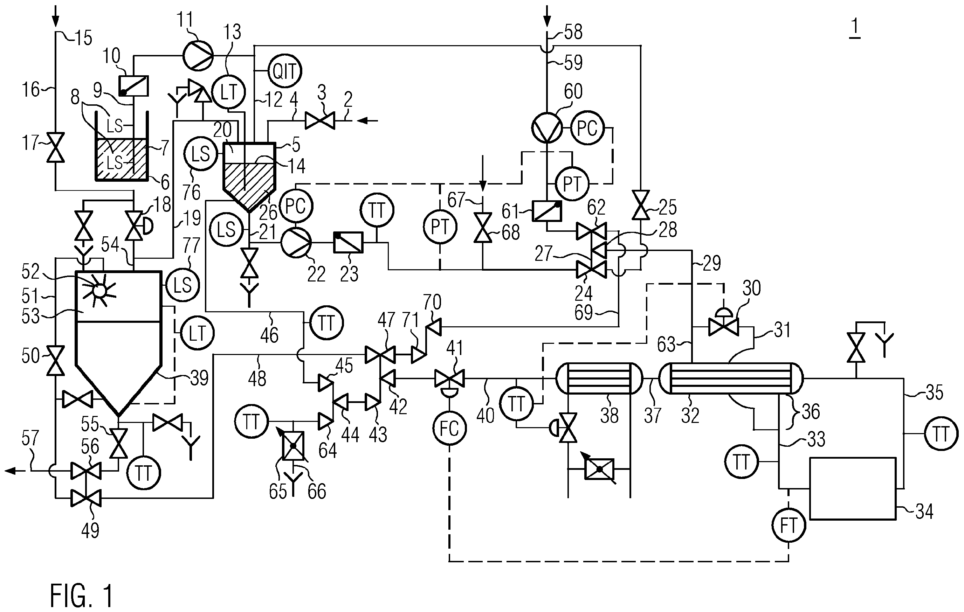

Die Figur 1 zeigt eine erste Ausführungsform einer Vorrichtung 1 zur PEF-Behandlung von flüssigen Medien. Durch einen ersten Einlass 2 kann mittels eines ersten Ventils 3 ein Sterilisationsmedium, z.B. Wasser oder Sterilwasser, über eine erste Zuleitung 4 in einen ersten Puffertank 5 eingebracht werden. Der erste Puffertank 5 kann als Druckbehälter ausgebildet sein.

In einem ersten Vorlagebehälter 6 wird ein erster leitwerterhöhender Stoff 7, z.B. Zitronensäure, bereitgestellt. Optional kann ein zweiter Vorlagenbehälter vorgesehen sein, in dem ein zweiter leitwerterhöhender Stoff, z.B. eine andere organische Säure als Zitronensäure, bereitgestellt wird. Beispielweise können der erste und/oder der zweite leitwerterhöhende Stoff Flüssigkeiten sein. In dem ersten Vorlagebehälter sind zwei erste Füllstandsmesser 8 in verschiedenen Höhen angeordnet. Der leitwerterhöhende Stoff 7 kann über eine zweite Zuleitung 9 durch eine erste Rückschlagklappe 10 und eine erste Pumpe 11 einem ersten Kreislauf zur Einstellung eines Leitwerts einer Mischung 26 aus dem Sterilisationsmedium und dem ersten leitwerterhöhenden Stoff 7 mittels Hinzufügen des ersten leitwerterhöhenden Stoffs 7 zu dem Sterilisationsmedium zugeführt werden. Der Leitwert der Mischung 26 kann derart eingestellt werden, dass er gleich dem eines flüssigen Produkts ist, das mit der Vorrichtung 1 behandelt werden soll.

Über eine dritte Zuleitung 12 kann der erste leitwerterhöhende Stoff 7 dem ersten Puffertank 5 und dem darin befindlichen Sterilisationsmedium zugeführt werden. Mittels eines Leitwertmessers 13 kann der Leitwert der Mischung 26 aus dem ersten leitwerterhöhenden Stoff 7 und dem Sterilisationsmedium in dem ersten Puffertank 5 gemessen werden. In dem ersten Puffertank 5 ist ein zweiter Füllstandsmesser 76 angeordnet.

Oberhalb einer Füllstandsoberfläche 14 in dem ersten Puffertank 5 kann eine Atmosphäre aus Stickstoff N₂ oder Kohlenstoffdioxid CO₂ vorgesehen werden. Über einen zweiten Einlass 15 kann Stickstoff N₂ oder Kohlenstoffdioxid CO₂ in eine vierte Zuleitung 16 eingebracht, über ein zweites Ventil 17 und über ein erstes Kontrollventil 18 einer fünften Zuleitung 19 zugeführt werden, über die der Stickstoff N₂ oder das Kohlenstoffdioxid CO₂ in einen ersten Kopfbereich 20 des ersten Puffertanks 5 gelangt.

Über eine sechste Zuleitung 21 kann die Mischung 26 aus dem ersten Puffertank 5 ausgebracht und in dem ersten Kreislauf geführt werden. Vom ersten Puffertank 5 kann die Mischung 26 über eine zweite Pumpe 22, eine zweite Rückschlagklappe 23, ein drittes und ein viertes Ventil 24, 25 wieder über die dritte Zuleitung 12 dem ersten Puffertank 5 zugeführt werden, um gegebenenfalls noch ersten leitwerterhöhenden Stoff 7 aus dem ersten Vorlagebehälter 6 hinzuzufügen, falls ein vorgegebener Leitwert der Mischung 26 noch nicht erreicht wurde. Optional kann wie der erste leitwerterhöhende Stoff 7 der zweite leitwerterhöhende Stoff oder können der erste 7 und der zweite leitwerterhöhende Stoff verwendet werden, um den Leitwert des Sterilisationsmediums einzustellen.

Der Mischung 26 kann zwischen der zweiten Rückschlagklappe 23 und dem dritten Ventil 24 über einen vierten Einlass 67 und ein siebzehntes Ventil 68 Rein-Dampf, beispielsweise mit 1,5 bar, zugeführt werden, um eine Erwärmung der Mischung 26 zu erreichen.

Wurde der vorgegebene Leitwert der Mischung 26 erreicht, kann die Mischung 26 zu einer Sterilisation mit dem PEF-Modul einem zweiten Kreislauf zugeführt werden - wobei in dem ersten Kreislauf weiter die erforderliche Mischung 26 erzeugt und bereitgestellt werden kann - und kann dazu nach dem dritten Ventil 24 - statt zum vierten Ventil 25 geleitet zu werden - über eine siebte Zuleitung 27 zu einem fünften Ventil 28 geführt werden. Über eine achte Zuleitung 29 kann die Mischung 26 zu einem zweiten Kontrollventil 30 gelangen, von dem aus die Mischung 26 über eine Bypassleitung 31 an einem Rekuperator 32 vorbei zu einer neunten Zuleitung 33, durch ein PEF-Modul 34 und über eine zehnte Zuleitung 35 zu dem Rekuperator 32 gelangen.

Optional kann die Mischung 26 zusätzlich von der achten Zuleitung 29 über eine neunzehnte Zuleitung 63 durch den Rekuperator 32 geleitet werden.

Danach kann die Mischung 26 durch den Rekuperator 32 über eine zwölfte Zuleitung 37 zu einem Wärmetauscher 38 gelangen. Der Wärmetauscher 38 kann während der Produktion zum Kühlen von flüssigem Produkt verwendet werden. Wird die Mischung 26 zurück zu dem ersten Puffertank 5 geleitet, kann dieser Wärmetauscher 38 außer Betrieb sein. Nach dem Wärmetauscher 38 kann die Mischung 26 über eine dreizehnte Zuleitung 40 zu einem dritten Kontrollventil 41, einem sechsten, siebten, achten und neunten Ventile 42, 43, 44, 45 und über eine vierzehnte Zuleitung 46 wieder zurück in den ersten Puffertank 5 gelangen.

Vorgehend beschriebener Durchlauf kann mehrmals erfolgen. Pro Umlauf durch das PEF-Modul 34 kann die Temperatur der Mischung 26 um etwa 15 - 20 Kelvin steigen. Die Erwärmung der Mischung 26 kann so lange fortgeführt werden, bis die Temperatur größer als eine vorgegebene Temperatur (z.B. 121 °C) ist, die der Sterilisationstemperatur entspricht. Sind beispielsweise ≥ 20 Minuten bei Überschreiten der vorgegebenen Temperatur abgelaufen, so ist das PEF-Modul 34 inklusive aller hygienischen bzw. sterilen Komponenten sterilisiert.

Zudem kann die Mischung 26 nach dem sechsten Ventil 42 zu einem zehnten Ventil 47 gelangen und über eine fünfzehnte Zuleitung 48 zu einem elften und zwölften Ventil 49, 50 und über eine sechzehnte Zuleitung 51 zu einer Sprühvorrichtung 52, die in einem zweiten Kopfbereich 53 des zweiten Puffertanks 39 angeordnet ist, gelangen und dort versprüht werden. In den zweiten Kopfbereich 53 kann über das erste Kontrollventil 18 und über eine siebzehnte Zuleitung 54 Stickstoff N₂ oder Kohlenstoffdioxid CO₂ in den zweiten Kopfbereich 53 eingebracht werden. Aus dem zweiten Puffertank 39 kann die zuvor versprühte Mischung 26 über ein dreizehntes und vierzehntes Ventil 55, 56 und einen ersten Auslass 57 ausgebracht werden. In dem zweiten Puffertank 39 ist ein dritter Füllstandsmesser 77 angeordnet.

Nachdem eine Sterilisation mittels des PEF-Moduls 34 und der durch es hindurchgeleiteten Mischung 26 vorgenommen wurde, kann flüssiges Produkt durch einen dritten Einlass 58 über eine achtzehnte Zuleitung 59, eine dritte Pumpe 60, eine dritte Rückschlagklappe 61, ein fünfzehntes Ventil 62, das fünfte Ventil 28 in die achte Zuleitung 29 gelangen, aus der das Produkt die noch darin befindliche Mischung 26 auf seinem Weg ausschieben kann. Über die achte Zuleitung 29 und die neunzehnte Zuleitung 63 gelangt das Produkt zu dem Rekuperator 32. Von dort kann das Produkt über die elfte Zuleitung 36 und die neunte Zuleitung 33 zum Zwecke der Sterilisation zu dem PEF-Modul 34 gelangen und über die zehnte Zuleitung 35 zurück zu dem Rekuperator 32.

Das Produkt kann optional durch das PEF-Modul 34 hindurch so lange im Kreis geführt werden, bis es sterilisiert ist. Danach kann das Produkt durch den Rekuperator 32 über eine zwölfte Zuleitung 37 zu dem Wärmetauscher 38 gelangen, wo eine Kühlung mittels des Wärmetauschers 38 stattfinden kann. Nach dem Wärmetauscher 38 kann das Produkt über die dreizehnte Zuleitung 40 zu dem dritten Kontrollventil 41 und dem sechsten, siebten und achten Ventil 42, 43, 44 gelangen. Über eine sechzehntes Ventil 64 kann das Produkt, das beispielweise zunächst noch die Mischung 26 ausschiebt und/oder mit der Mischung 26 vermischt ist, durch eine erste Absperrklappe 65 zu einem zweiten Auslass 66 gelangen.

Zudem kann es erforderlich sein, die Mischung 26 durch das nachschiebende Produkt auch aus dem sechsten Ventil 42 nachfolgenden zehnten Ventil 47, der fünfzehnten Zuleitung 48, dem elften und zwölften Ventil 49, 50, der sechzehnten Zuleitung 51, der Sprühvorrichtung 52 und dem zweiten Puffertank 39, sowie dem dreizehnten und vierzehnten Ventil 55, 56 und Zuleitungen zu dem ersten Auslass 57 komplett auszuschieben. Ist die Mischung 26 gänzlich durch das Produkt ausgeschoben worden, kann mit der Produktion begonnen werden.

Befindet sich dann nur noch Produkt in den entsprechenden Zuleitungen und Komponenten, so kann das Produkt nach dem sechsten Ventil 42 zu dem zehnten Ventil 47 gelangen und über die fünfzehnte Zuleitung 48 zu dem elften und zwölften Ventil 49, 50, vierzehnten Ventil 56 und dreizehnten Ventil 55 in den zweiten Puffertank 39 geführt werden. Somit kann das behandelte Produkt zum Ausgleich von Schwankungen nachfolgender Prozesse gepuffert werden. Alternativ kann das Produkt auch von dem vierzehnten Ventil 56 zu dem ersten Auslass 57 geleitet werden um von dort an einen nachfolgenden Prozess, beispielsweise einer Abfüllanlage übergeben zu werden.

Um Produkt auszuschieben, kann zur Erstellung der Mischung 26 statt des Sterilisationsmediums ein Ausschubmedium verwendet werden. Der Leitwert dieser Mischung kann dem Leitwert des auszuschiebenden Produkts entsprechen.

Bei einem Produktionsstopp kann, um die Sterilität weiter zu gewährleisten, die Mischung 26 aus dem ersten Pufferbehälter 5 mit einer Durchflussrate, die beispielsweise 15-20% der Durchflussrate bei der Sterilisation entspricht, durch die sechste Zuleitung 21, die zweite Pumpe 22, die zweite Rückschlagklappe 23, das dritte Ventil 24, die siebte Zuleitung 27, das fünfte Ventil 28, die achte Zuleitung 29, die neunzehnte Zuleitung 63, den Rekuperator 32, die elfte Zuleitung 36, die neunte Zuleitung 33, das PEF-Modul 34, die zehnte Zuleitung 35, den Rekuperator 32, die zwölfte Zuleitung 37, den Wärmetauscher 38, die dreizehnte Zuleitung 40, das dritte Kontrollventil 41, das sechste, siebte, achte, neunte Ventil 42, 43, 44, 45 und die vierzehnte Zuleitung 46 umlaufen und zurück zu dem ersten Puffertank 5 gelangen.

Soll ein Produkt keiner PEF-Behandlung mittels des PEF-Moduls 34 unterzogen werden, so kann das Produkt durch den dritten Einlass 58, über die achtzehnte Zuleitung 59, die dritte Pumpe 60, die dritte Rückschlagklappe 61, das fünfzehnte Ventil 62 zu einer zwanzigsten Zuleitung 69, und einem achtzehnten und neunzehnten Ventil 70, 71 gelangen und dann über das zehnte Ventil 47, die fünfzehnte Zuleitung 48, und das elfte und vierzehnte Ventil 49, 56 dem ersten Auslass 57 zugeführt werden. Falls erforderlich, kann das Produkt über das dreizehnte Ventil 55 auch dem zweiten Puffertank 39 zugeführt und dort zwischengespeichert werden.

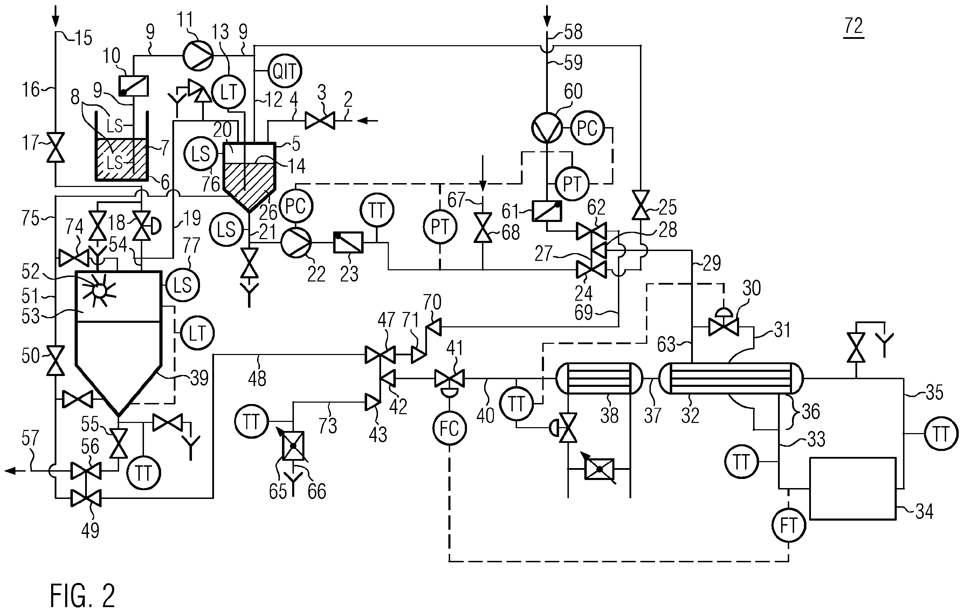

Die Figur 2 zeigt eine zweite Ausführungsform der Vorrichtung 72, die sich von der ersten Ausführungsform der Vorrichtung 1 der Figur dadurch unterscheidet, dass das achte und neunte Ventil 44, 45, das sechzehnte Ventil 64 und die vierzehnte Zuleitung 46 nicht vorgesehen sind. In der zweiten Ausführungsform der Vorrichtung 72 ist nach dem siebten Ventil 43 eine einundzwanzigste Zuleitung 73 vorgesehen, die zu der ersten Absperrklappe 65 und dem zweiten Auslass 66 führt.

Elemente, wie Zuleitungen, Ventile usw., die bereits im Zusammenhang mit der ersten Ausführungsform der Vorrichtung 1 aus der Figur 1 beschrieben wurden, besitzen in der Figur 2 die gleichen Bezugszeichen und werden nicht noch einmal explizit erwähnt.

Damit die Mischung 26 wieder in den ersten Puffertank 5 verbracht werden kann, ist anschließend an die sechzehnte Zuleitung 51 eine zweiundzwanzigste Zuleitung 75 vorgesehen, die zu dem ersten Puffertank 5 führt. Von der sechzehnten Zuleitung 51 kann die Mischung 26 oder das Produkt über ein zwanzigstes Ventil 74 der Sprühvorrichtung 52 in dem zweiten Puffertank 39 zugeführt werden.

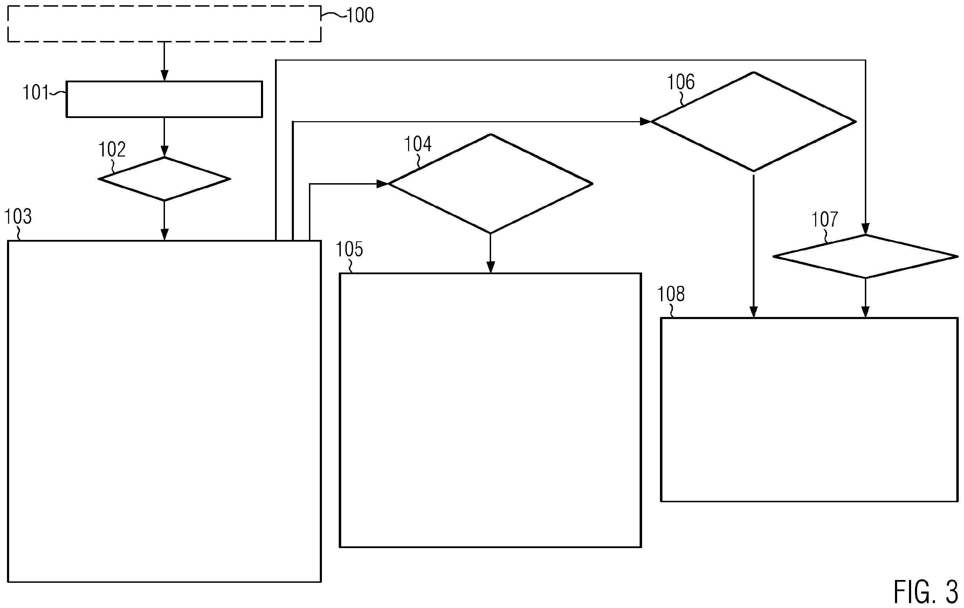

Die Figur 3 zeigt ein Flussdiagramm eines Verfahrens zum Betreiben einer Vorrichtung in der Getränke- oder Lebensmittelindustrie zur Pulsed Electric Field-Behandlung, PEF-Behandlung, von flüssigen Medien umfassend ein Pulsed Electric Field-Modul, PEF-Modul, beispielsweise der Vorrichtung 1, 72 wie zuvor beschrieben.

Im Schritt 100 kann optional ein Erstellen der Mischung mit einem Leitwert erfolgen. Dazu kann durch einen ersten Einlass 2 ein Sterilisationsmedium, z.B. Wasser oder Sterilwasser, in einen ersten Puffertank 5 eingebracht werden. Ein erster 7 und/oder ein zweiter leitwerterhöhender Stoff, z.B. Zitronensäure oder eine andere organische Säure, kann aus einem jeweiligen Vorlagebehälter 6 zur Einstellung des Leitwerts dem Sterilisationsmedium in dem ersten Puffertank 5 zugeführt werden. Durch Hinzufügen des ersten 7 und/oder zweiten leitwerterhöhenden Stoffs zu dem Sterilisationsmedium kann der Leitwert der Mischung 26 aus Sterilisationsmedium und erstem 7 und/oder zweitem leitwerterhöhenden Stoff eingestellt werden; beispielsweise derart, dass er gleich dem eines flüssigen Produkts ist, das mit der Vorrichtung 1, 72 behandelt werden soll.

Die Mischung 26 kann aus dem ersten Puffertank 5 ausgebracht und in einem ersten Kreislauf geführt werden, so dass gegebenenfalls noch erster 7 und/oder zweiter leitwerterhöhender Stoff aus dem Vorlagebehälter hinzugefügt werden kann, falls ein vorgegebener Leitwert der Mischung 26 noch nicht erreicht wurde.

Im Schritt 101 kann ein Bereitstellen der Mischung 26 erfolgen.

Um ein Sterilisieren 102 der notwendigen Anlagenteile durchzuführen, erfolgt im Schritt 103 ein Leiten der Mischung aus dem ersten Puffertank zum PEF-Modul und vom PEF-Modul zum Rekuperator und/oder Leiten der Mischung vom ersten Puffertank zum Rekuperator, vom Rekuperator zum PEF-Modul und wieder zum Rekuperator. Zum Erreichen der Sterilisation, erfolgt ein Ausleiten der Mischung aus dem Rekuperator und nach Verlassen des Rekuperators, ein Zuführen der Mischung über den Wärmetauscher zum ersten Puffertank und/oder zum zweiten Puffertank, dann erfolgt ein Leiten der Mischung umlaufend zumindest durch das PEF-Modul und den Rekuperator, bis eine Sterilisation erreicht wird.

Wird die Vorrichtung erstmals betrieben, so kann ein Betreiben des PEF-Moduls beginnen, sobald die Mischung durch es hindurchgeleitet wird. Die Mischung kann dann die vom PEF-Modul abgegebene Energie aufnehmen.

Somit kann das PEF-Modul kontinuierlich betrieben werden, da beim Sterilisieren 102 und der nachfolgend beschriebenen Produktion 104 unter Verwendung des PEF-Moduls, Produktion 106 ohne Verwendung des PEF-Moduls und einem Produktionsstopp 107 immer die Mischung oder Produkt oder die Mischung gemischt mit Produkt durch das PEF-Modul geleitet wird und so die vom PEF-Modul abgegebene Energie aufgenommen werden kann.

Nach erfolgter Sterilisation kann eine Produktion 104 unter Verwendung des PEF-Moduls erfolgen. Dazu erfolgt im Schritt 105 ein Zuführen von flüssigem Produkt über einen Einlass zum Rekuperator, ein Leiten des Produkts vom Rekuperator zum PEF-Modul und wieder zum Rekuperator, dann ein Ausleiten des Produkts aus dem Rekuperator und nach Verlassen des Rekuperators, ein Zuführen des Produkts über den Wärmetauscher zum zweiten Puffertank.

Nach erfolgter Sterilisation kann eine Produktion 106 ohne Verwendung des PEF-Moduls erfolgen. Auch ein Produktionsstopp 107 kann vorkommen. In diesen beiden Fällen erfolgt im Schritt 108, ein Leiten der Mischung vom ersten Puffertank zum Rekuperator und vom Rekuperator zum PEF-Modul wieder zum Rekuperator, ein Ausleiten der Mischung aus dem Rekuperator und nach Verlassen des Rekuperators, ein Zuführen der Mischung über den Wärmetauscher zum ersten Puffertank.

### Bezugszeichen

- 1: 1. Ausführungsform der Vorrichtung
- 2: 1. Einlass
- 3: 1. Ventil
- 4: 1. Zuleitung
- 5: 1. Puffertank
- 6: 1. Vorlagebehälter
- 7: 1. leitwerterhöhender Stoff
- 8: 1. Füllstandsmesser
- 9: 2. Zuleitung
- 10: 1. Rückschlagklappe
- 11: 1. Pumpe
- 12: 3. Zuleitung
- 13: Leitwertmesser
- 14: Füllstandsoberfläche
- 15: 2. Einlass
- 16: 4. Zuleitung
- 17: 2. Ventil
- 18: 1. Kontrollventil
- 19: 5. Zuleitung
- 20: 1. Kopfbereich
- 21: 6. Zuleitung
- 22: 2. Pumpe
- 23: 2. Rückschlagklappe
- 24: 3. Ventil
- 25: 4. Ventil
- 26: Mischung
- 27: 7. Zuleitung
- 28: 5. Ventil
- 29: 8. Zuleitung
- 30: 2. Kontrollventil
- 31: Bypassleitung
- 32: Rekuperator
- 33: 9. Zuleitung
- 34: PEF-Modul
- 35: 10. Zuleitung
- 36: 11. Zuleitung
- 37: 12. Zuleitung
- 38: Wärmetauscher
- 39: 2. Puffertank
- 40: 13. Zuleitung
- 41: 3. Kontrollventil
- 42: 6. Ventil
- 43: 7. Ventil
- 44: 8. Ventil
- 45: 9. Ventil
- 46: 14. Zuleitung
- 47: 10. Ventil
- 48: 15. Zuleitung
- 49: 11. Ventil
- 50: 12. Ventil
- 51: 16. Zuleitung
- 52: Sprühvorrichtung
- 53: 2. Kopfbereich
- 54: 17. Zuleitung
- 55: 13. Ventil
- 56: 14. Ventil
- 57: 1. Auslass
- 58: 3. Einlass
- 59: 18. Zuleitung
- 60: 3. Pumpe
- 61: 3. Rückschlagklappe
- 62: 15. Ventil
- 63: 19. Zuleitung
- 64: 16. Ventil
- 65: 1. Absperrklappe
- 66: 2. Auslass
- 67: 4. Einlass
- 68: 17. Ventil
- 69: 20. Zuleitung
- 70: 18. Ventil
- 71: 19. Ventil
- 72: 2. Ausführungsform der Vorrichtung
- 73: 21. Zuleitung
- 74: 20. Ventil
- 75: 22. Zuleitung
- 76: 2. Füllstandsmesser
- 77: 3. Füllstandsmesser

## Patentansprüche

1. Vorrichtung (1, 72) in der Getränke- oder Lebensmittelindustrie zur Pulsed Electric Field-Behandlung, PEF-Behandlung, von flüssigen Medien umfassend ein Pulsed Electric Field-Modul, PEF-Modul (34),
**dadurch gekennzeichnet, dass**
die Vorrichtung (1, 72) derart ausgebildet ist, dass während eines Betriebs der Vorrichtung (1, 72) das PEF-Modul (34) kontinuierlich betreibbar ist durch Bereitstellen einer Mischung (26) eines Ausschubmediums mit mindestens einem leitwerterhöhenden Stoff zum Ausschieben von flüssigem Produkt aus der Vorrichtung (1, 72) oder eines Sterilisationsmediums mit dem mindestens einen leitwerterhöhenden Stoff zum Sterilisieren des PEF-Moduls (34) und vom Bereich der Vorrichtung (1, 72), der dem PEF-Modul (34) nachfolgt, wobei die Mischung (26) durch das PEF-Modul (34) leitbar ist.

2. Die Vorrichtung nach Anspruch 1, weiter umfassend:
- mindestens einen Vorlagenbehälter (6), der ausgebildet ist jeweils einen der mindestens einen leitwerterhöhenden Stoffe (7) bereitzustellen,
- einen ersten Puffertank (5), der ausgebildet ist, das Ausschubmedium oder das Sterilisationsmedium und den mindestens einen leitwerterhöhenden Stoff (7) aufzunehmen,
wobei optional der mindestens eine leitwerterhöhende Stoff (7) eine Flüssigkeit und/oder Feststoff ist, wobei optional der mindestens eine leitwerterhöhende Stoff (7) eine organische Säure, wie beispielsweise Zitronensäure, ist, wobei optional das Ausschubmedium oder das Sterilisationsmedium Wasser oder Sterilwasser ist.

3. Die Vorrichtung nach Anspruch 2, wobei der erste Puffertank (5) einen Leitwertmesser (13) umfasst, der ausgebildet ist, einen Leitwert der in dem Puffertank (5) befindlichen Mischung (26) zu messen.

4. Die Vorrichtung nach Anspruch 2 oder 3, wobei der erste Puffertank (5) ein Druckbehälter ist.

5. Die Vorrichtung nach Anspruch 3 oder 4, wobei die Vorrichtung einen ersten Kreislauf zur Einstellung des Leitwerts der Mischung (26) umfasst.

6. Die Vorrichtung nach einem der Ansprüche 1 bis 5, wobei die Vorrichtung (1, 72) weiter einen Rekuperator (32), einen Wärmetauscher (38) und einem zweiten Puffertank (39) umfasst.

7. Die Vorrichtung nach Anspruch 6, wobei der erste Puffertank (5) und das PEF-Modul (34) derart leitungsverbunden sind, dass die Mischung (26) aus dem ersten Puffertank (5) zu dem PEF-Modul (34) leitbar ist, und wobei das PEF-Modul (34) und der Rekuperator (32) derart leitungsverbunden sind, dass die Mischung (26) von dem PEF-Modul (34) zu dem Rekuperator (32) leitbar ist und die Mischung (26) umlaufend zumindest durch das PEF-Modul (34) und den Rekuperator (32) , optional noch zusätzlich durch den ersten und/oder zweiten Puffertank (5, 39), leitbar ist, bis eine Sterilisation erreichbar ist.

8. Die Vorrichtung nach Anspruch 7, wobei der Rekuperator (32), der Wärmetauscher (38) und der zweite Puffertank (39) derart leitungsverbunden sind, dass die Mischung (26) nach Verlassen des Rekuperators (32) über den Wärmetauscher (38) dem zweiten Puffertank (39) zuführbar ist, wobei optional der zweite Puffertank (39) eine Sprühvorrichtung (52) umfasst.

9. Die Vorrichtung nach Anspruch 7 oder 8, wobei der Rekuperator (32), der Wärmetauscher (38) und der erste Puffertank (5) derart leitungsverbunden sind, dass die Mischung (26) nach Verlassen des Rekuperators (32) über den Wärmetauscher (38) dem ersten Puffertank (5) zuführbar ist.

10. Die Vorrichtung nach einem der Ansprüche 6 bis 9, wobei der erste Puffertank (5) weiter derart mit dem Rekuperator (32) leitungsverbunden ist, dass die Mischung (26) von dem ersten Puffertank (5) zu dem Rekuperator (32) leitbar ist, wobei der Rekuperator (34) und das PEF-Modul (34) und der Rekuperator (32) derart leitungsverbunden sind, dass die Mischung (26) von dem Rekuperator (34) zu dem PEF-Modul (34) wieder zu dem Rekuperator (32) leitbar ist und die Mischung (26) umlaufend zumindest durch das PEF-Modul (34) und den Rekuperator (32) leitbar ist, bis eine Sterilisation erreichbar ist.

11. Die Vorrichtung nach einem der Ansprüche 6 bis 10, wobei die Vorrichtung (1, 72) weiter einen Einlass (58) für ein flüssiges Produkt, wie beispielsweise ein Getränk oder ein Lebensmittel, umfasst, wobei der Einlass (58) mit dem Rekuperator (32) derart leitungsverbunden ist, dass das flüssige Produkt dem Rekuperator (32) zuführbar ist, wobei der Rekuperator (32) und das PEF-Modul (34) und der Rekuperator (32) derart leitungsverbunden sind, dass das flüssige Produkt von dem Rekuperator zu dem PEF-Modul (34) und wieder zu dem Rekuperator (32) leitbar ist und das flüssige Produkt zumindest durch das PEF-Modul (34) und den Rekuperator (32) leitbar ist, wobei der Rekuperator (32), der Wärmetauscher (38) und der zweite Pufferbehälter (39) derart leitungsverbunden sind, dass das flüssige Produkt nach Verlassen des Rekuperators (32) über den Wärmetauscher (38) dem zweiten Puffertank (39) zuführbar ist, wobei optional der zweite Puffertank (39) eine Sprühvorrichtung (52) umfasst.

12. Die Vorrichtung nach einem der Ansprüche 6 bis 11, wobei der Einlass (58) und der zweite Puffertank (39) derart leitungsverbunden sind, dass das flüssige Produkt unter Umgehung des Rekuperators (32), des PEF-Moduls (34) und des Wärmetauschers (38) dem zweiten Puffertank (39) zuführbar ist.

13. Verfahren, beispielsweise zum Betreiben der Vorrichtung (1, 72) nach einem der Ansprüche 1 bis 12, umfassend folgende Schritte:
- Bereitstellen (101) einer Mischung (26) eines Ausschubmediums mit mindestens einem leitwerterhöhenden Stoff zum Ausschieben von flüssigem Produkt aus einer Vorrichtung (1, 72) in der Getränke- oder Lebensmittelindustrie zur Pulsed Electric Field-Behandlung, PEF-Behandlung, von flüssigen Medien umfassend ein Pulsed Electric Field-Modul, PEF-Modul (34),oder eines Sterilisationsmediums mit dem mindestens einen leitwerterhöhenden Stoff zum Sterilisieren eines PEF-Moduls (34) der Vorrichtung (1, 72) und vom Bereich der Vorrichtung (1, 72), der dem PEF-Modul (34) nachfolgt, wobei die Mischung (26) durch das PEF-Modul (34) leitbar ist.

14. Das Verfahren nach Anspruch 13, wobei für ein Sterilisieren (102, 103):
- die Mischung (26) aus einem ersten Puffertank (5) der Vorrichtung (1, 72) zu dem PEF-Modul (34) und von dem PEF-Modul (34) zu einem Rekuperator (32) der Vorrichtung (1, 72) geleitet wird und/oder die Mischung (26) von dem ersten Puffertank (5) zu dem Rekuperator (32), von dem Rekuperator (32) zu dem PEF-Modul (34) und wieder zu dem Rekuperator (32) geleitet wird,
- die Mischung (26) nach Verlassen des Rekuperators (32) über den Wärmetauscher (38) dem ersten Puffertank (5) und/oder einem zweiten Puffertank (39) der Vorrichtung (1, 72) zugeführt wird,
- die Mischung (26) dann umlaufend zumindest durch das PEF-Modul (34) und den Rekuperator (32) geleitet wird, bis eine Sterilisation erreicht wird.

15. Das Verfahren nach Anspruch 13, wobei während eines Produktionsstopps (107) und/oder während einer Produktion (106) mit einem flüssigen Produkt, das unter Umgehung eines Rekuperators (32) der Vorrichtung (1, 72), des PEF-Moduls (34) und eines Wärmetauschers (38) der Vorrichtung (1, 72) einem zweiten Puffertank (39) der Vorrichtung (1, 72) zugeführt wird:
- die Mischung (26) von dem ersten Puffertank (5) zu dem Rekuperator (32) und von dem Rekuperator (32) zu dem PEF-Modul (34) wieder zu dem Rekuperator (32) geleitet wird,
- die Mischung (26) aus dem Rekuperator (32) geleitet wird,
- die Mischung (26) nach Verlassen des Rekuperators (32) über den Wärmetauscher (38) dem ersten Puffertank (39) zugeführt wird.

16. Verfahren, beispielsweise zum Sterilisieren zumindest eines Teils einer Vorrichtung (1, 72) nach einem der Ansprüche 1 bis 12, umfassend folgende Schritte:
- Sterilisieren, in einem Sterilisationsmodus, mittels erhitztem Wasser, optional durch eine erhitzte Mischung aus Wasser und einem leitwerterhöhendem Stoff, von Leitungen und/oder Puffertanks einer Vorrichtung in der Getränke- oder Lebensmittelindustrie zur Pulsed Electric Field-Behandlung (PEF-Behandlung) von flüssigen Medien, die ein Pulsed Electric Field-Modul, PEF-Modul umfassen, wobei die Leitungen und/oder Puffertanks ausgebildet sind, in einem Produktionsmodus, von den durch das PEF-Modul sterilisierten flüssigen Medien durchflossen zu werden und/oder die durch das PEF-Modul sterilisierten flüssigen Medien zwischenzulagern,
**dadurch gekennzeichnet, dass**
eine Erhitzung des Wassers, optional eine Erhitzung der Mischung, ausgehend von einer ersten Temperatur von 90°C auf eine zweite Temperatur von 110°C bis 130°C lediglich durch das PEF-Modul erfolgt.

17. Das Verfahren nach Anspruch 16, wobei die Erhitzung des Wassers, optional die Erhitzung der Mischung, ausgehend von einer dritten Temperatur kleiner als 90°C bis zur ersten Temperatur von 90°C lediglich durch das PEF-Modul, durch das PEF-Modul und einen Wärmetauscher oder lediglich durch den Wärmetauscher erfolgt.
